# FASCICULE DE BREVET EUROPEEN

(11) **EP 2 746 579 B1**
(45) Date de publication et mention de la délivrance du brevet: **18.11.2015**
(21) Numéro de dépôt: 13176679.2
(22) Date de dépôt: 16.07.2013
(51) Int. Cl.: F03D 11/04

(54) **Architecture de montage de rotor de type Darrieus ou Savonius permettant de charger les roulements**
Montageaufbau einer Rotors vom Typ Darrieus oder Savonius, der eine Belastung der Wälzlager erlaubt
Architecture for mounting a Darrieus or Savonius rotor making it possible to load the bearings

(30) Priorité: 20.12.2012 FR 1203515
(43) Date de publication de la demande: 25.06.2014
(73) Titulaire: Sarl Eolie, 92310 Sevres (FR)
(72) Inventeur: Hesnard, Renaud, 92310 Sèvres (FR)
(74) Mandataire: Parzy, Benjamin Alain

(56) Documents cités:
- WO-A1-2009/075853
- GB-A- 1 518 151
- US-A1- 2010 295 316

## Description

La présente invention concerne un dispositif permettant de charger radialement les paliers à éléments roulants maintenant l'arbre d'un rotor d'une turbine de type Darrieus ou Savonius, comme par exemple décrit dans le document GB-A-1 518 151.

Les turbines de type Darrieus ou Savonius sont pourvues d'un rotor captant l'énergie cinétique du flux de fluide traversant la section balayée par le rotor, quelle que soit la direction du flux dans le plan orthogonal à l'axe de rotation. Pour ces raisons, ces turbines ont des applications du type d'éolienne à axe verticale. Elles permettent d'entraîner un dispositif convertisseur de puissance transformant l'énergie mécanique transmise par l'arbre. Ce dispositif convertisseur est couramment un générateur, un réducteur ou une pompe.

La liaison pivot garantissant la fonction de rotation d'arbre peut être assurée par des roulements mécaniques à billes ou à rouleaux. Néanmoins, ces roulements sont conçus pour fonctionner avec une charge radiale minimale, de l'ordre de 10% de la charge axiale pour des roulements à bille. Or la masse du rotor pèse de façon axiale sur les roulements d'une éolienne à arbre verticale.

Au repos, les paliers sont chargés d'une composante axiale seule. Un effort radial est introduit par les efforts de pression du fluide traversant la section balayée par le rotor. Il faut donc un certain niveau de vitesse du fluide traversant le rotor pour assurer un niveau de charge significatif et correspondant aux charges radiales minimales requises pour le fonctionnement des paliers à éléments roulants du type des roulements à billes. Ce manque de pré charge à basse vitesse cinématique du fluide induit un vieillissement de ce type de palier.

D'ordre général, les paliers à éléments roulants étant l'origine de coût de maintenance, de problème de fiabilité, et de perte de rendement, certains dispositifs sont déployés par les constructeurs pour réaliser la fonction pivot de façon simple et fiable. On trouve notamment des solutions de palier magnétiques en remplacement des paliers à éléments roulants, des dispositifs permettant de répartir les charges axiales sur les roulements, ou des architectures combinant différents types de roulements, afin de répartir les efforts appliqués en différentes composantes, chacune étant portée par une liaison adaptée. Usuellement, les efforts axiaux sont repris par une butée à billes, tandis que les efforts radiaux sont repris par des roulements à rouleaux.

Ces différents systèmes présentent des inconvénients en termes de coûts liés aux composants nécessaires pour déployer les solutions.

La présente invention présente une architecture du rotor, permettant de charger les paliers à éléments roulants d'une composante radiale minimale, permettant ainsi d'employer deux paliers à éléments roulants conventionnels du type roulements à billes ou à rouleaux pour assurer la liaison tournante, sans nécessiter de dispositif dédié à la reprise des efforts axiaux.

L'invention comporte un rotor pourvu d'un arbre lié à un bâti fixe en au moins deux points via des liaisons pivot de type roulement. L'ensemble du rotor est incliné par le bais du décalage des roulements sur un plan vertical.

En d'autres termes la turbine comprend un bâti recevant à rotation un rotor qui comporte un arbre muni de moyens de son entraînement par captation d'énergie cinétique d'un fluide, ainsi que deux paliers à éléments roulants s'étendant entre l'arbre du rotor et le bâti pour établir une liaison tournante entre le rotor et le bâti autour d'un axe de rotation. L'axe de rotation est incliné par rapport à la verticale d'un angle compris entre 1 et 20 degrés.

En service, le centre de gravité du rotor est sensiblement sur l'axe de rotation, tout en étant à l'extérieur des paliers.

Le capteur d'énergie cinétique du fluide peut être un capteur éolien.

Selon les modes particuliers de réalisation :
Le palier le plus éloigné du centre de gravité du rotor peut être lié au bâti par une liaison souple élastiquement déformable.

Le palier le plus éloigné du centre de gravité du rotor peut être lié au bâti par une liaison libre en translation sur le bâti, selon une direction parallèle à l'axe de rotation du rotor.

Le palier le plus éloigné du centre de gravité du rotor peut être monté de façon libre en translation sur l'arbre, réalisant ainsi une liaison de type pivot glissant.

L'arbre du rotor peut comprendre une liaison libre en translation entre les deux paliers à éléments roulants. Cette liaison peut être un dispositif comprenant une glissière et un coulisseau, chacun lié rigidement à une partie du rotor.

Le rotor peut comporter une masse additionnelle s'étendant à l'extérieur des paliers, de préférence au-delà du centre de gravité du rotor, afin d'amplifier le couple de basculement dû au poids du rotor.

L'arbre peut être maintenu en un appui, réalisé par un roulement, et un second appui assuré par la génératrice, la pompe ou le réducteur lié à l'arbre.

En d'autres termes un des paliers peut être intégré à un dispositif convertisseur de puissance reçu sur le bâti et auquel l'arbre de rotor est connecté.

Le dispositif convertisseur de puissance peut être une pompe, un réducteur, ou une génératrice.

Le rotor pourra être de type Darrieus, Savonius ou mixte Darrieus et Savonius.

En d'autres termes le rotor est pourvu d'un moyen de son entraînement par captation d'énergie cinétique d'un fluide, pouvant être du type Darrieus, Savonius, ou mixte Darrieus etSavonius.

Les dessins annexés présentent l'invention :

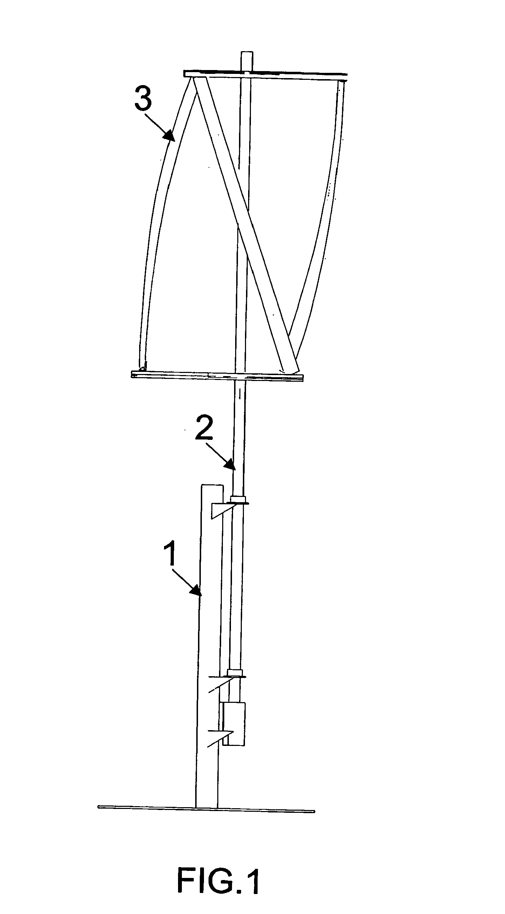

- la figure 1 représente un rotor de type Darrieus à axe vertical,

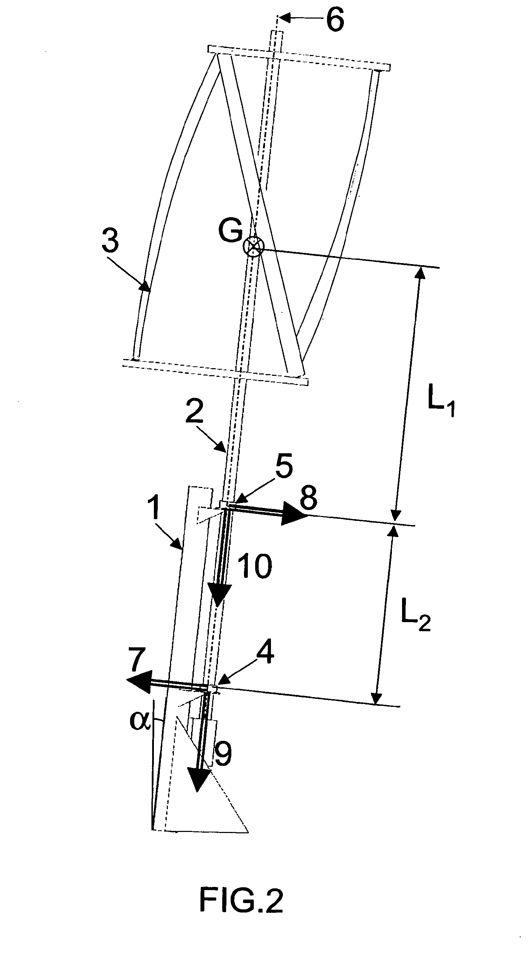

- la figure 2 représente l'architecture du montage du rotor selon l'invention.

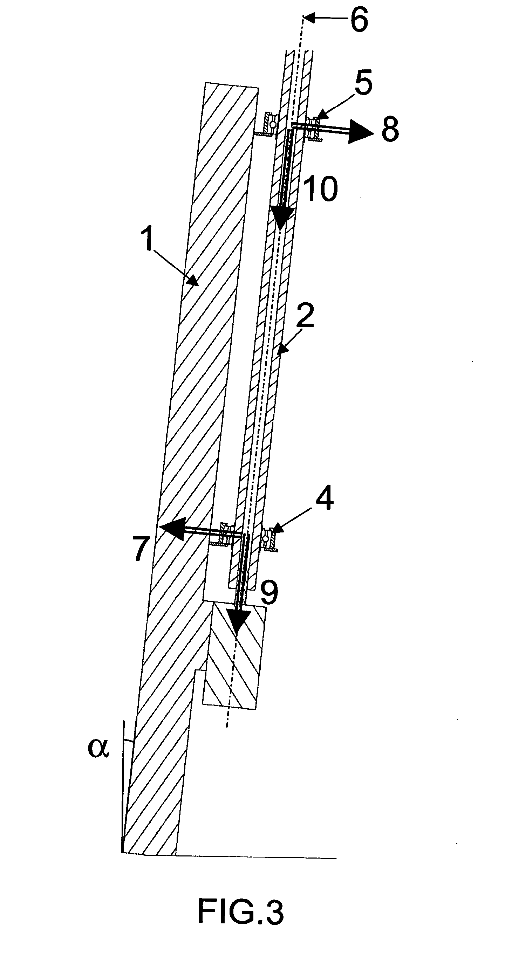

- La figure 3 représente l'architecture du montage en coupe,

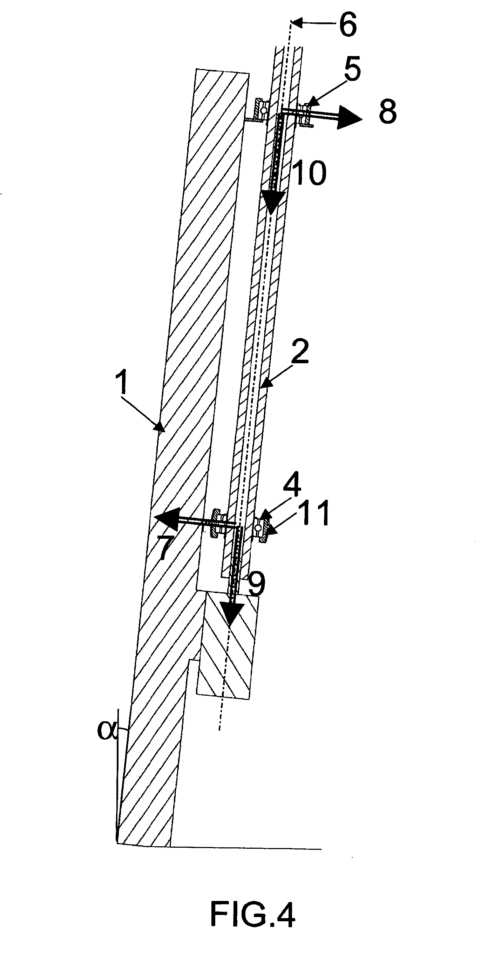

- la figure 4 représente une variante du montage, comprenant une liaison élastique entre le bâti et un palier à éléments roulants,
- la figure 5 représente une variante du montage, comprenant une liaison libre en translation entre le palier à éléments roulants et l'arbre de rotor,
- la figure 6 représente une variante du montage, comprenant une liaison libre en translation sur l'arbre de rotor, entre les deux paliers à éléments roulants,

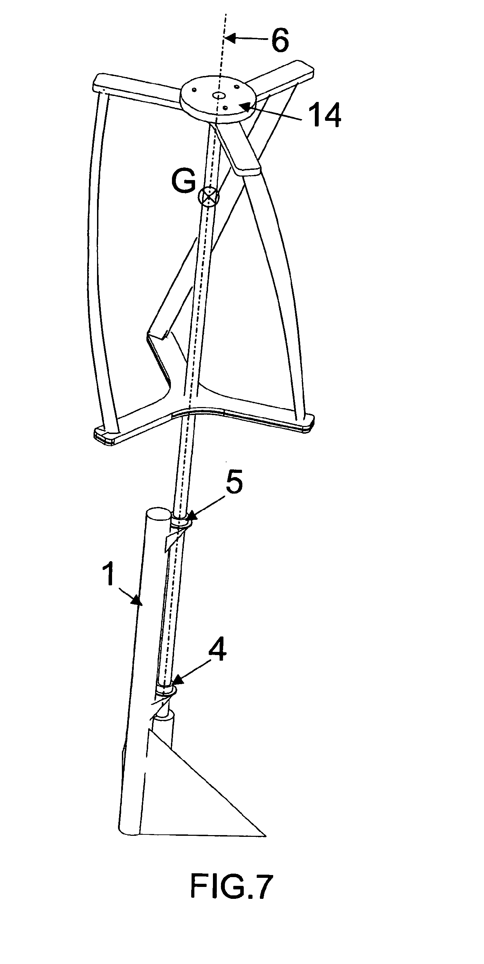

- la figure 7 représente la variante intégrant une masse additionnelle s'étendant à l'extérieur des paliers,

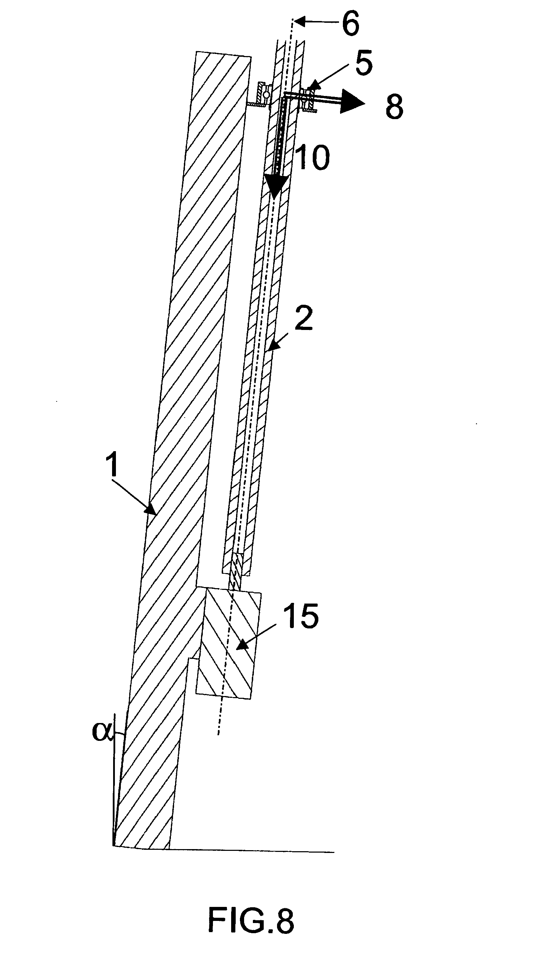

- la figure 8 représente une variante consistant à utiliser les paliers interne du dispositif de conversion de puissance pour remplacer les paliers d'arbre.
- la figure 9 représente la mesure de l'angle β d'orientation du fluide dans le plan horizontal.

En référence à ces dessins, l'invention comporte un bâti 1, un rotor comportant un arbre 2 muni de son moyen d'entraînement 3 par captation d'énergie cinétique d'un fluide ainsi que deux paliers à éléments roulants 4, 5 s'étendant entre l'arbre du rotor et le bâti pour établir une liaison tournante entre le rotor et le bâti 1 autour d'un axe de rotation 6. Les paliers sont montés d'un côté sur l'arbre de rotor, et de l'autre sur le bâti. Afin de compenser les éventuelles dispersions de réalisation de l'arbre et du bâti, on privilégiera des paliers auto aligneurs pourvus de moyens de blocage du type bague conique. Les paliers à éléments roulants sont préférablement du type roulements à billes à gorge profonde.

Les paliers sont montés sur l'arbre, de telle sorte que le centre de gravité G du rotor soit à l'extérieur des paliers.

L'axe de rotation du rotor est incliné par rapport à la verticale d'un angle α compris entre 1 et 20 degrés.

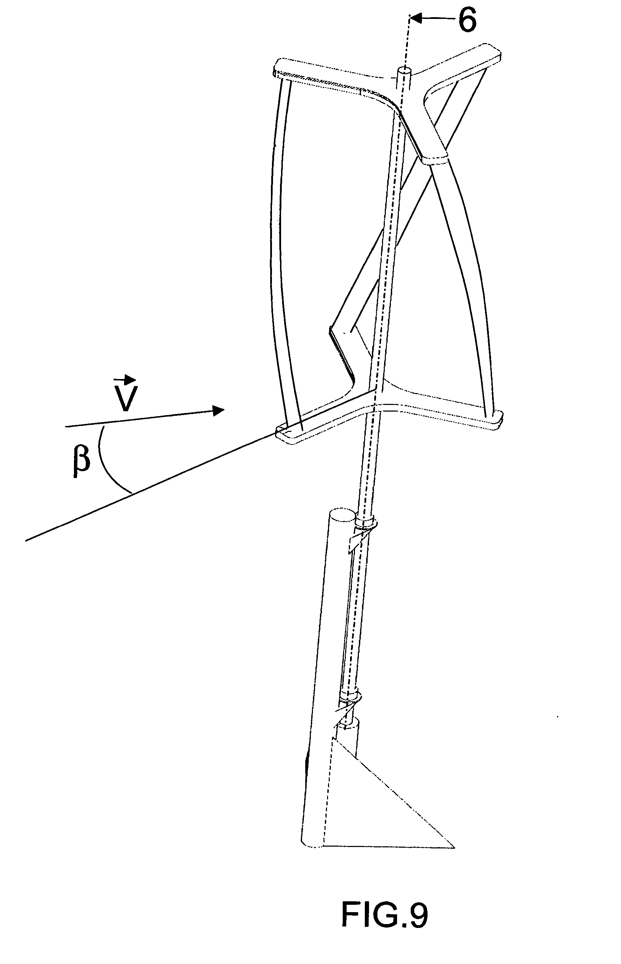

L'inclinaison du rotor dans le plan décrit par l'angle entre une droite verticale et l'axe de rotation induit une baisse du rendement aéraulique de la turbine. Cette baisse de rendement reste néanmoins faible : selon l'inventeur, pour un angle d'inclinaison de 5 degrés, le coefficient multiplicateur du rendement sera compris entre 0,99 et 1, en fonction de l'angle d'orientation β du fluide tel que décrit en figure 9. L'angle d'orientation β du fluide est défini comme l'angle entre la direction du fluide et le plan décrit par une droite verticale et l'axe de rotation du rotor.

Afin de limiter la perte de rendement induit par l'inclinaison de l'axe de rotation, l'angle α d'inclinaison du rotor privilégié dans le mode de réalisation présenté est de 5 degrés.

Le poids du rotor, appliqué à son centre de gravité, génère un couple de basculement dû à l'angle d'inclinaison de l'axe de rotation du rotor par rapport à la verticale. Ce couple de basculement est repris par les deux paliers à éléments roulants 4, 5, et génère des forces de réaction orthogonales 7, 8 à l'axe de rotation 6, donc radiales pour les paliers à éléments roulants. Les composantes radiales sont d'autant plus grandes que les paliers sont rapprochés l'un de l'autre, et éloignés du centre de gravité du rotor. Afin de combiner l'effort radial et axial permettant une durée de vie accrue du palier à éléments roulants, la composante radiale doit être significative en regard de la charge axiale. Pour des paliers à éléments roulants conventionnels du type roulement à billes à gorge profonde, une charge radiale minimale de 10% de la charge axiale est habituellement recommandée.

Avec un angle d'inclinaison de l'axe de rotation de 5 degrés, et afin de garantir une charge radiale minimale suffisante sur les paliers à éléments roulants, il est préférable de maintenir une distance entre les paliers L₂ de l'ordre de 1,5 fois (entre 0,5 et 2,5 fois) la distance L₁ du centre de gravité du rotor au palier le plus proche.

Selon cette conception, le palier 5 le plus proche du centre de gravité supportera un plus grand effort radial 8 que le palier le plus éloigné 4.

Les descriptions précédentes ont pour inconvénient de ne pas garantir l'équilibre des efforts axiaux 9, 10 entre les paliers 4, 5. Une dispersion de montage peut générer des déséquilibres de charge axiale dans les paliers. Un palier pourra alors être surchargé au détriment de l'autre.

Une variante aux descriptions précédentes consiste à lier le palier le plus éloigné du centre de gravité 4 du rotor au bâti 1 par le biais d'une liaison souple élastiquement déformable 11. Les dispersions de fabrication et de montage pouvant introduire des déséquilibres d'efforts axiaux sont alors partiellement compensées par la souplesse de la liaison. Le bâti et le rotor doivent être conçus de telle sorte que le rotor ne repose axialement que sur le palier le plus proche du centre de gravité au nominal des tolérances. Une dispersion de fabrication ou de montage est alors compensée par la liaison élastique, et l'effort axial transmis par celle-ci dépendra alors de la raideur de la liaison élastique. En sélectionnant des liaisons suffisamment souples selon la direction de l'axe de rotation du rotor, l'effort axial 9 transmis par le palier le plus éloigné du centre de gravité reste faible.

Le palier le plus éloigné du centre de gravité 4 peut alors être dimensionné principalement selon son effort radial 7. Le palier le plus proche du centre de gravité 5, supportant naturellement le plus grand effort radial 8 est alors dimensionné pour reprendre l'intégralité de l'effort axial 10. Pour un angle d'inclinaison de 5 degrés, la distance entre les paliers L₂ sera préférablement de 4 (entre 2 et 6 fois) fois la distance L₁ entre le centre de gravité G et le palier le plus proche.

De façon similaire, en remplaçant la liaison souple 11 par une liaison libre en translation entre le palier et le bâti, dans une direction parallèle à l'axe de rotation du rotor 6, le palier le plus éloigné du centre de gravité 4 se retrouve déchargé des charges axiales 9 au profit du palier le plus proche du centre de gravité du rotor 5. A nouveau, pour un angle d'inclinaison de 5 degrés, la distance L₂ entre les paliers à éléments roulants est préférablement de 4 (entre 2 et 6 fois) fois la distance L₁ entre le centre de gravité et le palier le plus proche.

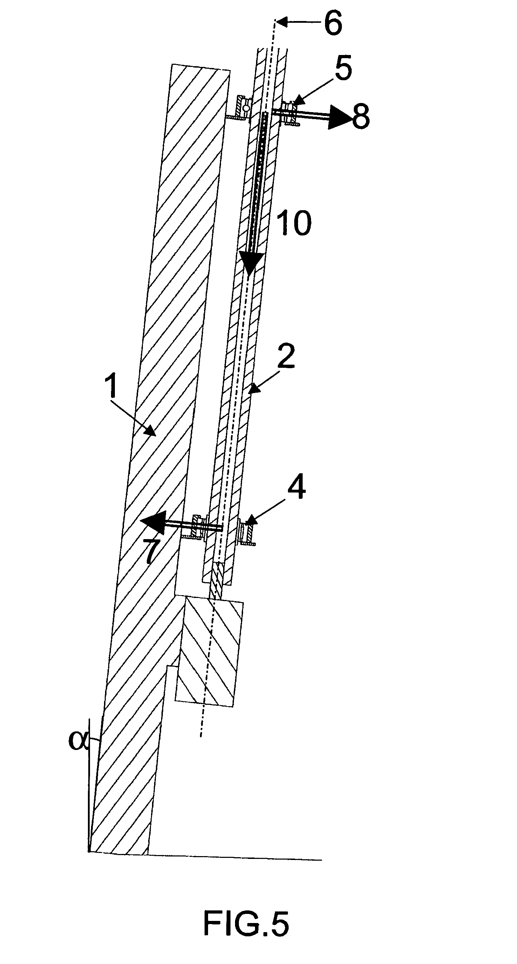

De façon similaire, en montant un des paliers 4, 5 de façon libre sur l'arbre du rotor 2, ce palier se retrouve déchargé des efforts axiaux 9, 10 au profit de l'autre palier. Afin de charger axialement le palier à éléments roulants le plus chargé radialement, il est préférable de monter le palier 4 le plus éloigné du centre de gravité de façon libre sur l'arbre 2. La figure 5 représente cette architecture, en sélectionnant un palier à éléments roulants du type à aiguilles. A nouveau, pour un angle de 5 degrés, il est préférable de maintenir une distance entre les paliers L₂ de l'ordre de 4 fois (entre 2 et 6 fois) la distance L₁ du centre de gravité du rotor au palier le plus proche.

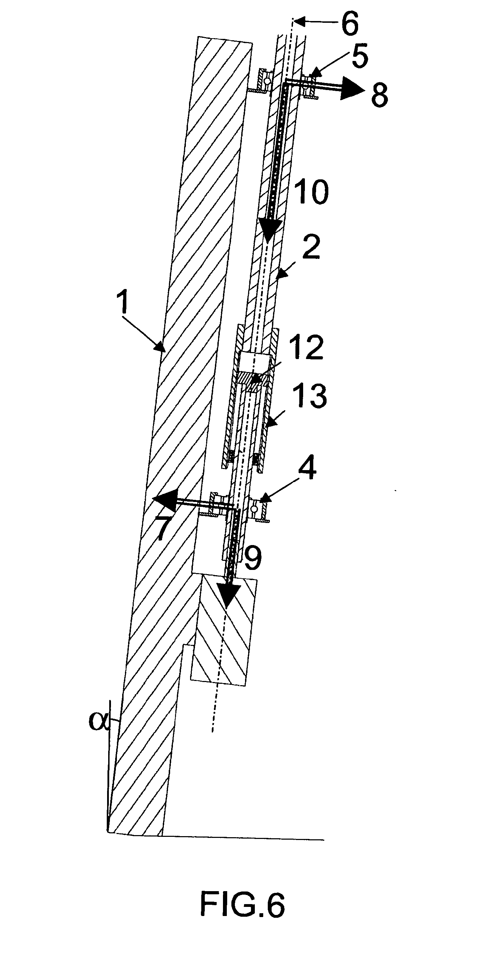

La figure 6 présente une variante qui introduit une liaison libre en translation située entre les deux paliers, par un guidage composé d'un coulisseau 12 et d'une glissière 13 liés chacun à une partie de l'arbre du rotor 2. Le rotor est alors constitué de deux solides, chaque palier 4, 5 supportant le poids d'un solide en effort axial, et les paliers supportant le couple de basculement de façon similaire aux variantes précédentes, via des efforts radiaux 7, 8. Préférablement, la distance L₂ entre les deux paliers sera alors inférieure à 4 (entre 2 et 4 fois) fois la distance L₁ entre le centre de gravité du rotor et du palier le plus proche du centre de gravité du rotor, dépendant de la répartition des masses entre chaque solide constituant le rotor.

Une variante des descriptions précédentes consiste à ajouter une masse 14 sur le rotor, en extrémité de celui-ci, afin d'augmenter la distance entre le centre de gravité G du rotor et les paliers 4, 5. La masse est préférablement de l'ordre de 25% (entre 10% et 40%) de la masse du rotor, placée en extrémité de rotor, sous la forme d'un disque dense. L'ajout de cette masse permet d'augmenter le couple de basculement à iso géométrie de turbine, ce qui a pour intérêt d'augmenter significativement les charges radiales 7, 8 des paliers à éléments roulants 4, 5.

Une variante de la description de l'architecture consiste à utiliser les paliers internes du dispositif de conversion de puissance 15 pour réaliser la fonction pivot du palier 4 le plus éloigné du centre de gravité du rotor. Les dispositifs de conversion de puissance sont usuellement pourvus de paliers de type roulement à billes, capable de supporter des efforts radiaux et axiaux. La variante consiste à lier le rotor à l'arbre du dispositif de conversion, par une liaison rigide, afin de prolonger mécaniquement l'arbre du rotor par l'arbre d'entrée du dispositif de conversion. La masse du dispositif de conversion de puissance liée à l'arbre est à intégrer dans la détermination de la position du centre de gravité du rotor G, ce qui est néfaste à la compacité de l'architecture. Il est alors préférable de combiner cette solution à la variante consistant à introduire une liaison libre en translation sur l'arbre de rotor, entre les deux paliers.

Le rotor est pourvu d'un moyen de son entraînement 3 par captation d'énergie cinétique d'un fluide. Ce moyen est préférablement du type éolien et plus particulièrement adapté aux éoliennes de type Darrieus, Savonius ou mixtes Darrieus et Savonius.

Le dispositif selon l'invention est particulièrement adapté aux éoliennes de type Darrieus.

## Revendications

1. Turbine comprenant un bâti (1) recevant à rotation un rotor qui comporte un arbre (2) muni de moyens de son entraînement (3) par captation d'énergie cinétique d'un fluide, deux paliers à éléments roulants (4, 5) s'étendant entre l'arbre du rotor et le bâti pour établir une liaison tournante du rotor sur le bâti autour d'un axe de rotation (6), **caractérisée en ce qu'**en service, le rotor a un centre de gravité (G) sensiblement sur l'axe de rotation tout en étant à l'extérieur des paliers, l'axe de rotation du rotor étant incliné par rapport à la verticale d'un angle compris entre 1 et 20 degrés.

2. Turbine selon la revendication 1, dans laquelle le palier (4) le plus éloigné du centre de gravité du rotor est lié au bâti (1) par une liaison souple élastiquement déformable (11).

3. Turbine selon la revendication 1, dans laquelle le palier (4) le plus éloigné du centre de gravité du rotor est monté libre en translation sur le bâti (1), selon une direction parallèle à l'axe de rotation du rotor (6).

4. Turbine selon la revendication 1, dans laquelle le palier (4) le plus éloigné du centre de gravité (G) du rotor est monté libre en translation sur l'arbre (2).

5. Turbine selon la revendication 1, dans laquelle l'arbre (2) comprend une liaison libre en translation entre les deux paliers (4, 5) à éléments roulants.

6. Turbine selon l'une des revendications précédentes, dans laquelle le rotor comporte une masse additionnelle (14) s'étendant à l'extérieur des paliers (4, 5) .

7. Turbine selon l'une des revendications précédentes, dans laquelle l'un des paliers (4,5) est formé par un roulement, et l'autre des paliers est intégré à un dispositif convertisseur de puissance (15) reçu sur le bâti (1) et auquel l'arbre (2) du rotor est connecté.

8. Turbine selon la revendication 7, dans laquelle le dispositif convertisseur de puissance (15) est choisi parmi les éléments suivants : une pompe, un réducteur, une génératrice.

9. Turbine selon l'une des revendications précédentes dans laquelle le moyen d'entraînement (3) par captation d'énergie cinétique d'un fluide est de type Darrieus, Savonius, ou mixte Darrieus et Savonius.

## Patentansprüche

1. Turbine, umfassend ein Gestell (1), das drehbar einen Rotor aufnimmt, der eine Welle (2) umfasst, die mit Mitteln (3) für ihren Antrieb durch Einfangen kinetischer Energie eines Fluids versehen ist, sowie zwei Lager mit Rollelementen (4, 5), die sich zwischen der Welle des Rotors und dem Gestell erstrecken, um eine Drehverbindung des Rotors an dem Gestell um eine Drehachse (6) herzustellen, **dadurch gekennzeichnet, dass** der Rotor im Betrieb einen Schwerpunkt (G) hat, der im Wesentlichen auf der Drehachse und zugleich außerhalb der Lager liegt, wobei die Drehachse des Rotors gegenüber der Vertikalen um einen Winkel zwischen 1 und 20 Grad geneigt ist.

2. Turbine nach Anspruch 1, wobei das am weitesten vom Schwerpunkt des Rotors entfernte Lager (4) mit dem Gestell (1) durch eine elastisch verformbare flexible Verbindung (11) verbunden ist.

3. Turbine nach Anspruch 1, wobei das am weitesten vom Schwerpunkt des Rotors entfernte Lager (4) an dem Gestell (1) in einer Richtung parallel zur Drehachse des Rotors (6) in Translation frei beweglich gelagert ist.

4. Turbine nach Anspruch 1, wobei das am weitesten vom Schwerpunkt (G) des Rotors entfernte Lager (4) an der Welle (2) in Translation frei beweglich gelagert ist.

5. Turbine nach Anspruch 1, wobei die Welle (2) eine in Translation frei bewegliche Verbindung zwischen den beiden Lagern (4, 5) mit Rollelementen umfasst.

6. Turbine nach einem der vorhergehenden Ansprüche, wobei der Rotor eine zusätzliche Masse (14) umfasst, die sich außerhalb der Lager (4, 5) erstreckt.

7. Turbine nach einem der vorhergehenden Ansprüche, wobei eines der Lager (4, 5) von einem Wälzläger gebildet und das andere der Lager in einer Leistungswandlungsvorrichtung (15) integriert ist, die an dem Gestell (1) aufgenommen und mit der die Welle (2) des Rotors verbunden ist.

8. Turbine nach Anspruch 7, wobei die Leistungswandlungsvorrichtung (15) unter den folgenden Elementen ausgewählt wird: eine Pumpe, ein Getriebe, ein Generator.

9. Turbine nach einem der vorhergehenden Ansprüche, wobei die Antriebsmittel (3) zum Antrieb durch Einfangen kinetischer Energie eines Fluids vom Typ Darrieus, Savonius oder einer Mischung aus Darrieus und Savonius sind.

## Claims

1. A turbine comprising a stand (1) rotatably receiving a rotor that comprises a shaft (2) provided with means (3) for driving it by capturing kinetic energy from a fluid, two rolling bearings (4, 5) extending between the shaft of the rotor and the stand in order to establish a rotary connection of the rotor on the stand about an axis of rotation (6), the turbine being **characterized in that**, in service, the rotor has a center of gravity (G) substantially on the axis of rotation while being outside the bearings, the axis of rotation of the rotor being inclined relative to the vertical by an angle lying in the range 1 degree to 20 degrees.

2. A turbine according to claim 1, wherein the bearing (4) further from the center of gravity of the rotor is connected to the stand (1) via a flexible connection that is elastically deformable (11).

3. A turbine according to claim 1, wherein the bearing (4) further from the center of gravity of the rotor is mounted on the stand (1) so as to be free to move in translation relative thereto in a direction parallel to the axis of rotation (6) of the rotor.

4. A turbine according to claim 1, wherein the bearing (4) further from the center of gravity (G) of the rotor is mounted on the shaft (2) so as to be free to move in translation relative thereto.

5. A turbine according to claim 1, wherein the shaft (2) includes a connection with freedom to move in translation between the two rolling bearings (4, 5).

6. A turbine according to any preceding claim, wherein the rotor includes an additional mass (14) extending outside the bearings (4, 5).

7. A turbine according to any preceding claim, wherein one of the bearings (4, 5) is constituted by a ball bearing, and the other of the bearings is incorporated in a power converter device (15) received on the stand (1) and to which the shaft (2) of the rotor is connected.

8. A turbine according to claim 7, wherein the power converter device (15) is selected from the following elements: a pump; stepdown gearing; and a generator.

9. A turbine according to any preceding claim, wherein the means (3) for providing drive by capturing kinetic energy from a fluid is of the Darrieus type, of the Savonius type, or of the combined Darrieus and Savonius type.
